# EUROPÄISCHE PATENTANMELDUNG

(11) **EP 2 332 772 A2**
(43) Veröffentlichungstag der Anmeldung: **15.06.2011**
(21) Anmeldenummer: 10193309.1
(22) Anmeldetag: 01.12.2010
(51) Int. Cl.: B60L 11/18

(54) **Aufladestationensystem**

(30) Priorität: 09.12.2009 DE 102009057429
(71) Anmelder: H. B. SEISSENSCHMIDT AG, 58840 Plettenberg (DE)
(72) Erfinder: Huber, Dr. Stefan, 58540, Meinerzhagen (DE); Bauseler, Siegbert, 57399, Kirchhundem (DE)
(74) Vertreter: Albrecht, Dirk

(57) **Zusammenfassung**

Automatisiertes Aufladestationensystem (10) zum Verbinden von Elektrofahrzeug-Energiequellen (26) mit einer zentralen Energiequelle, mit einer Mehrzahl von Aufladestationen (14), die jeweils eine über eine zentrale Energiequelle gespeiste Energieversorgung aufweisen, einem oder mehreren definierten Verfahrwegen (18), die sich entlang der einzelnen Aufladestationen (14) erstrecken, einer oder mehreren von entlang der Verfahrwege (18) zu den Aufladestationen (14) bewegbaren Kopplungseinheiten (22), die jeweils zur Erzeugung einer elektrischen Verbindung zwischen einer Aufladeschnittstelle (24) der Elektrofahrzeug-Energiequelle (26) eines an einer Aufladestation (14) positionierten Elektrofahrzeugs (28) und der Energieversorgung der Aufladestation (14) ausgebildet sind, und wenigstens einer Steuerungseinheit (30) zur bedarfsgerechten Steuerung der Kopplungseinheiten (22).

## Beschreibung

Die vorliegende Erfindung betrifft ein automatisiertes Aufladestationensystem zum Verbinden von Elektrofahrzeug-Energiequellen mit einer zentralen Energiequelle, insbesondere zur Durchführung von Auflade- und Entladevorgängen.

Aufladestationen zum Aufladen von Elektrofahrzeugakkumulatoren sind im Stand der Technik in verschiedenen Ausgestaltungen bekannt. In der einfachsten Form wird eine Aufladeschnittstelle der Elektrofahrzeug-Energiequelle nach dem Abstellen des Fahrzeugs manuell über ein Kabel mit einer zentralen Energiequelle, beispielsweise einem Stromnetz mit 230 V verbunden, woraufhin der Ladevorgang erfolgt. Vor dem Losfahren muss die Kabelverbindung wieder getrennt und das Kabel verstaut werden. Ferner sind ortsfeste Aufladestationen bekannt, bei denen die Verbindung zwischen der zentralen Energiequelle und der Aufladeschnittstelle der Elektrofahrzeug-Energiequelle automatisch über eine Robotereinheit erfolgt, siehe hierzu beispielsweise die DE-A 10 2009 006 982 oder die US-A-5,617,003. Derartige Aufladestationen eignen sich insbesondere für den häuslichen Gebrauch oder für den Einsatz an Tankstellen. Weniger geeignet sind sie hingegen für den Einsatz in Parkhäusern, großflächigen Parkbereichen oder dergleichen. Die Anordnung jeweils einer Aufladestation an jedem Parkplatz wäre alleine schon aufgrund der Tatsache, dass nicht jedes in einem Parkhaus abgestellte Fahrzeug elektrisch aufgeladen werden muss, zu kostenintensiv. Auch wäre ein bedarfsgerechter Transport einer solchen Aufladestation zu den aufzuladenden Elektrofahrzeugen zu aufwendig. Darüber hinaus sind die in den genannten Druckschriften offenbarten Aufladestationen nicht gegen Vandalismus und Diebstahl geschützt.

Ausgehend von diesem Stand der Technik ist es eine Aufgabe der vorliegenden Erfindung, ein Aufladestationensystem der eingangs genannten Art mit alternativem Aufbau zu schaffen.

Zur Lösung dieser Aufgabe schafft die vorliegende Erfindung ein automatisiertes Aufladestationensystem der eingangs genannten Art mit einer Mehrzahl von Aufladestationen, die jeweils eine über eine zentrale Energiequelle gespeiste Energieversorgung aufweisen und denen jeweils bevorzugt ein Parkplatz zugeordnet ist, einem oder mehreren definierten Verfahrwegen, die sich entlang der einzelnen Aufladestationen erstrecken, einer oder mehreren von entlang der Verfahrwege zu den Aufladestationen bewegbaren Kopplungseinheiten, die jeweils zur Erzeugung einer elektrischen Verbindung zwischen einer Aufladeschnittstelle der Elektrofahrzeug-Energiequelle eines an einer Aufladestation positionierten Elektrofahrzeugs und der Energieversorgung der Aufladestation ausgebildet sind, und wenigstens einer Steuerungseinheit zur bedarfsgerechten Steuerung der Kopplungseinheiten.

Aufgrund dieses Aufbaus des erfindungsgemäßen Aufladestationensystems ist es möglich, Kopplungseinheiten bedarfsgerecht und mit dem gewünschten Automatisierungsgrad an denjenigen Aufladestationen bzw. Parkplätzen bereitzustellen, an denen aufzuladende Elektrofahrzeuge abgestellt sind. Dabei kann eine große Anzahl von Aufladestationen bzw. Parkplätzen unter Einsatz geringer Kosten mit nur wenigen Kopplungseinheiten bedarfsgerecht versorgt werden, da nicht jedes an einer Aufladestation abgestelltes Fahrzeug aufgeladen werden muss, wie beispielsweise Fahrzeuge mit Verbrennungsmotoren. Ein weiterer Vorteil des erfindungsgemäßen Aufladestationensystems besteht darin, dass sich dieses sehr gut vor Vandalismus und Diebstahl schützen lässt. Darüber hinaus können die Elektrofahrzeug-Energiequellen der an das erfindungsgemäße Aufladestationensystem gekoppelten Fahrzeuge vorteilhaft als temporäre Zwischenspeicher für die zentrale Energieversorgung genutzt werden.

Gemäß einer Ausgestaltung der vorliegenden Erfindung ist wenigstens eine mit der Steuereinheit kommunizierende Anforderungseinheit vorgesehen, über die eine Kopplungseinheit für eine bestimmte Aufladestation bzw. einen bestimmten Parkplatz angefordert werden kann. Bei der Anforderungseinheit kann es sich beispielsweise um einen zentralen Terminal handeln, bei dem ein Benutzer die erforderlichen Informationen eingibt, wie beispielsweise die Nummer der Aufladestation oder des Parkplatzes, an der bzw. auf dem das aufzuladende Elektrofahrzeug abgestellt ist, die ungefähre Dauer des Aufenthaltes, Informationen bezüglich der Zahlungsmodalitäten, wie beispielsweise Kreditkartennummer oder dergleichen etc. Alternativ kann eine Anforderungseinheit an jeder Aufladestation vorgesehen sein. Darüber hinaus besteht die Möglichkeit, dass das Elektrofahrzeug über geeignete Schnittstellen direkt mit der Anforderungseinheit kommuniziert und die erforderlichen Daten bereitstellt.

Bevorzugt ist wenigstens ein Antrieb zum Bewegen der Kopplungseinheiten entlang des Verfahrwegs vorgesehen, so dass die Kopplungseinheiten automatisch zu denjenigen Aufladestationen bewegt werden können, an denen ein Elektrofahrzeug aufgeladen werden soll. Vorteilhaft ist jede Kopplungseinheit mit einem eigenen Antrieb versehen, so dass diese autark bewegt werden können.

Gemäß einer Ausgestaltung der vorliegenden Erfindung weist jede Aufladestation eine von einem Verfahrweg abzweigende Aufnahmeeinrichtung auf, die zur temporären Aufnahme einer Kopplungseinheit und zur Herstellung einer elektrischen Verbindung zwischen der Kopplungseinheit und der Energieversorgung der Aufladestation ausgebildet ist. Eine solche Aufnahmeeinrichtung ist insbesondere dahingehend von Vorteil, dass der Verfahrweg nicht von einer an einer Aufladestation angehaltenen Kopplungseinheit versperrt werden kann.

Bevorzugt sind die Aufnahmeeinrichtungen entlang des Verfahrwegs begrenzt verschiebbar, so dass eine in einer Aufnahmeeinrichtung aufgenommene Kopplungseinheit weiterhin entlang des Verfahrwegs in vorbestimmten Grenzen bewegt werden kann. Entsprechend ist eine Ausrichtung der Kopplungseinheit in Bezug auf die Aufladeschnittstelle eines an der Aufladestation geparkten Elektrofahrzeugs in Richtung des Verfahrwegs möglich. Zur Verschiebung der Aufnahmeeinrichtung entlang des Verfahrwegs kann beispielsweise ein entsprechender Antrieb vorgesehen sein. Alternativ ist es aber auch möglich, die Aufnahmeeinrichtung temporär über entsprechende Mitnehmer mit einer sich entlang des Verfahrwegs bewegten Kopplungseinheit zu koppeln und auf diese Weise eine Bewegung der Aufnahmeeinrichtung entlang des Verfahrwegs über die Bewegung der Kopplungseinheit zu realisieren. Im letzteren Fall ist entsprechend kein zusätzlicher Antrieb erforderlich.

Bevorzugt ist jede Kopplungseinheit innerhalb einer Aufnahmeeinrichtung zumindest quer zum Verfahrweg bewegbar aufgenommen, insbesondere senkrecht. Entsprechend kann innerhalb der Aufnahmeeinrichtung auch eine Ausrichtung der Kopplungseinheit quer zum Verfahrweg realisiert werden.

Gemäß einer weiteren Ausgestaltung der vorliegenden Erfindung ist wenigstens eine Lokalisierungseinrichtung zur automatischen Lokalisierung der Position der am Elektrofahrzeug angeordneten Aufladeschnittstelle vorgesehen. Eine solche Lokalisierungseinrichtung kann beispielsweise als eine Detektoreinheit zur Positionsermittlung der Aufladeschnittstelle des Elektrofahrzeugs auf Basis eines Signals eines Radio Frequency Identification (RFID)-Chips ausgeführt sein, der an der Aufladeschnittstelle angeordnet ist. Alternativ kann die Detektoreinheit auch zur Positionsermittlung der Aufladeschnittstelle des Elektrofahrzeugs auf Basis von optischen Merkmalen der Aufladeschnittstelle ausgeführt sein. Hierzu kann die Lokalisierungseinrichtung beispielsweise eine mit einem Bildverarbeitungsprogramm gekoppelte Kamera umfassen.

Die Lokalisierungseinrichtungen können jeweils an den Aufladestationen angeordnet sein. Bevorzugt ist jedoch jede Kopplungseinheit mit einer Lokalisierungseinrichtung versehen. Da die Anzahl der Kopplungseinheiten normalerweise geringer als die Anzahl der Aufladestationen ist, können auf diese Weise Kosten eingespart werden. Alternativ kann aber auch eine entlang der Verfahrwege bewegbare und mit einer Lokalisierungseinrichtung versehene Lokalisierungseinheit zur Positionsermittlung der Aufladeschnittstelle eines Elektrofahrzeugs eingesetzt werden, welche die ermittelten Positionsdaten an eine entsprechende Kopplungseinheit ggf. über die Steuereinheit übermittelt. Basierend auf den Positionsdaten kann die Kopplungseinheit daraufhin zur gewünschten Position bewegt werden.

Gemäß noch einer weiteren Ausgestaltung der vorliegenden Erfindung ist jede Kopplungseinheit mit einer ausfahrbaren, insbesondere teleskopierbaren Schnittstelle zum Herstellen der elektrischen Verbindung zwischen der Kopplungseinheit und der Aufladeschnittstelle eines Elektrofahrzeugs versehen. Entsprechend kann ein zwischen der Kopplungseinheit und der Aufladeschnittstelle vorhandener Abstand überbrückt werden. Bei der Schnittstelle kann es sich beispielsweise um einen Stecker oder um eine induktive Schnittstelle handeln.

Die Verfahrwege können ein Schienen- oder Rohrsystem umfassen. Letzteres ist dahingehend von besonderem Vorteil, dass die Kopplungseinheiten durch das Rohrsystem bewegt und auf diese Weise vor äußeren Einflüssen geschützt werden können, insbesondere vor Vandalismus und Diebstahl.

Bevorzugt ist mit dem Verfahrweg ein Magazin zur Lagerung mehrerer Kopplungseinheiten verbunden, aus dem die Kopplungseinheiten bedarfsgerecht entnommen werden können.

Vorteilhaft ist die Anzahl der Kopplungseinheiten geringer als die Anzahl der Aufladestationen. Da in der Praxis nicht davon auszugehen ist, dass an sämtlichen Aufladestationen zeitgleich Aufladungen von Elektrofahrzeug-Energiequellen durchgeführt werden müssen, kann das erfindungsgemäße Aufladestationensystem auf diese Weise preiswerter gestaltet werden. Dabei kann die Anzahl der Kopplungseinheiten wesentlich geringer als die Anzahl der Aufladestationen ausfallen.

Weitere Merkmale und Vorteile der vorliegenden Erfindung werden nachfolgend anhand einer beispielhaften Ausführungsform eines erfindungsgemäßen automatisierten Aufladestationensystems unter Bezugnahme auf die beiliegende Zeichnung beschrieben. Darin ist:
- **Figur 1:**: eine schematische Draufsicht eines automatisierten Aufladesta- tionensystems gemäß einer Ausführungsform der vorliegenden Erfindung;
- **Figur 2:**: eine schematische perspektivische Seitenteilansicht des in Figur 1 gezeigten Aufladestationensystems;
- **Figur 3:**: eine perspektivische Ansicht einer Kopplungseinheit des in den Figuren 1 und 2 dargestellten Aufladestationensystems;
- **Figur 4:**: eine gegenüber Figur 3 um 180° gedrehte perspektivische An- sicht; und
- **Figur 5:**: eine perspektivische Ansicht einer Lokalisierungseinheit eines automatisierten Aufladestationensystems gemäß einer weiteren Ausführungsform der vorliegenden Erfindung.

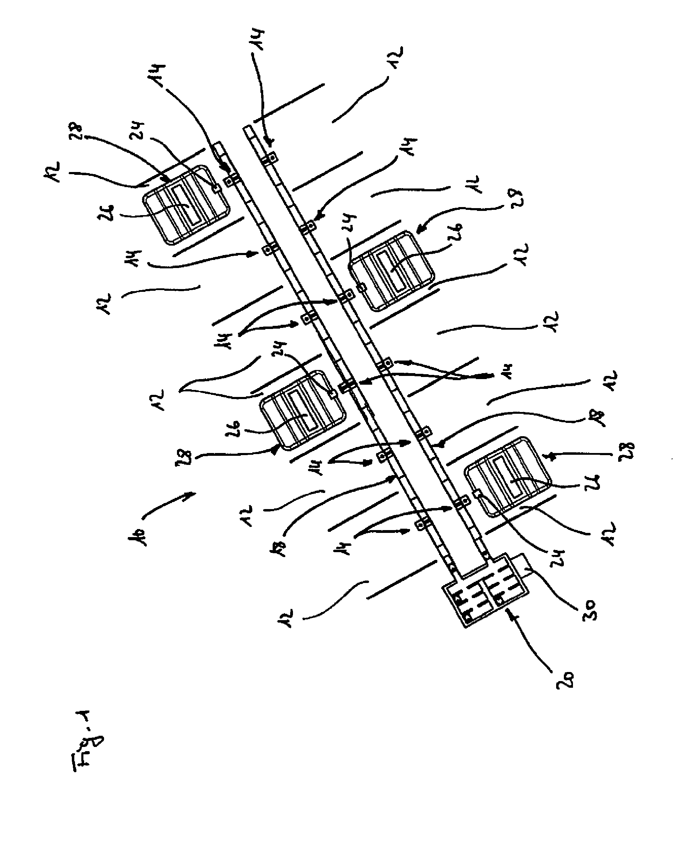

Die Figuren 1 bis 4 zeigen eine Ausführungsform eines erfindungsgemäßen automatisierten Aufladestationensystems 10, das zum Laden von Elektrofahrzeug-Energiequellen dient und vorliegend in einem großflächigen Parkbereich mit mehreren Parkplätzen 12 installiert ist. Das Aufladestationensystem 10 umfasst mehrere zugeordnete Aufladestationen 14, die jeweils einem Parkplatz 12 zugeordnet sind und eine über eine nicht näher dargestellte zentrale Energiequelle gespeiste Energieversorgung aufweisen. Hierzu sind die Aufladestationen 14 über Kabel 16 mit der zentralen Energiequelle verbunden, bei der es sich beispielsweise um ein herkömmliches Stromnetz handeln kann. Ferner umfasst das Aufladestationensystem 10 definierte Verfahrwege 18, die sich entlang der einzelnen Aufladestationen 14 erstrecken und durch Rohre mit rechteckigem Querschnitt gebildet sind. In einem Magazin 20 sind mehrere Kopplungseinheiten 22 angeordnet, die jeweils zur Erzeugung einer elektrischen Verbindung zwischen einer Aufladeschnittstelle 24 einer Elektrofahrzeug-Energiequelle 26 eines an einer Aufladestation 14 positionierten Elektrofahrzeugs 28 und der Energieversorgung der entsprechenden Aufladestation 14 ausgebildet sind. Die Kopplungseinheiten 22 können, wie es nachfolgend noch näher beschrieben wird, bedarfsgerecht aus dem Magazin 20 durch den Verfahrweg 18 zu einer der Aufladestationen 14 bewegt werden, wenn an dieser ein aufzuladendes Elektrofahrzeug 28 abgestellt wird. Dabei übernimmt eine Steuerungseinheit 30 die bedarfsgerechte Steuerung der Kopplungseinheiten 22.

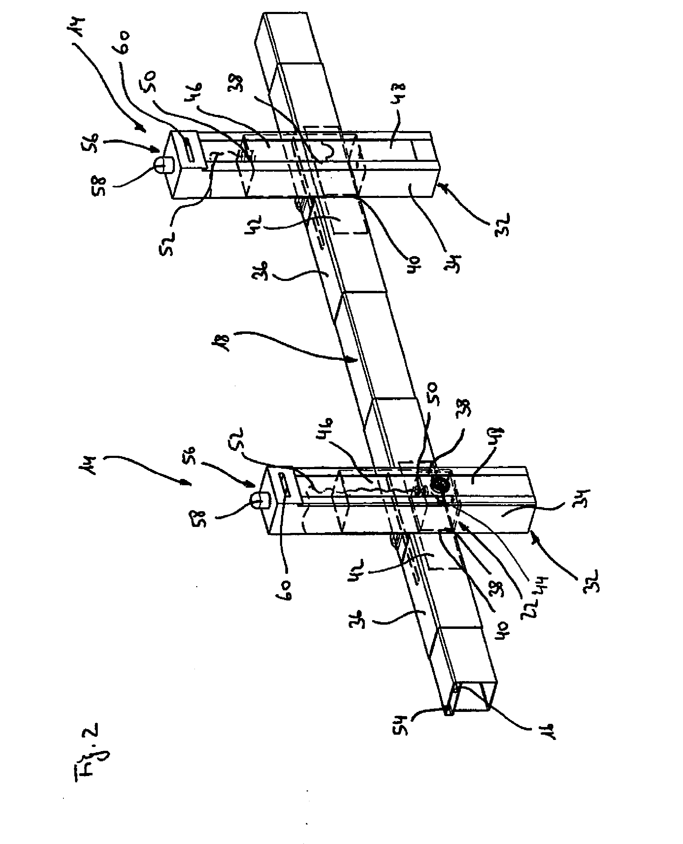

An jeder Aufladestation 14 zweigt, wie es in Figur 2 gezeigt ist, von einem Verfahrweg 18 eine Aufnahmeeinrichtung 32 ab, die zur temporären Aufnahme einer Kopplungseinheit 22 und zur Herstellung einer elektrischen Verbindung zwischen der aufgenommenen Kopplungseinheit 22 und der Energieversorgung der Aufladestation 14 ausgebildet ist. Die Aufnahmeeinrichtung 32 umfasst ein Rohr 34 mit rechteckigem Querschnitt, das sich senkrecht zum Verfahrweg 18 erstreckt und entlang des Verfahrwegs 18 verschiebbar an diesem gehalten ist. Hierzu ist das Rohr 34 fest mit einer den Verfahrweg 18 umgreifenden und entlang diesem verschiebbar angeordneten Hülse 36 verbunden. Das Rohr 34 der Aufnahmeeinrichtung 32 und der Verfahrweg 18 kommunizieren miteinander über eine im Rohr 34 ausgebildete Aussparung 38, eine in der Hülse 36 ausgebildete Öffnung 40 und ein im Verfahrweg 18 ausgebildetes Langloch 42. Entsprechend kann eine Kopplungseinheit 22 aus dem Verfahrweg 18 in das Rohr 34 der Aufnahmeeinrichtung 32 bewegt werden. Die der Aussparung 38 gegenüberliegende Seite des Rohrs 34 weist eine sich in vertikaler Richtung erstreckende längliche Aussparung 44 auf, die von zwei versetzt zueinander angeordneten und gegeneinander verschiebbaren Verschlussplatten 46 und 48 verschlossen ist. Beim Einfahren einer Kopplungseinheit 22 in das Rohr 34 werden die Verschlussplatten 46 und 48 durch eine nicht näher dargestellte Mechanik automatisch auseinander geschoben, so dass ein Teil der Kopplungseinheit 22 von außen durch die längliche Aussparung 44 zugänglich ist. Beim Ausfahren der Kopplungseinheit 22 verschließen die Verschlussplatten 46 und 48 die längliche Aussparung 44 wieder selbständig.

Eine Schnittstelle 50 der Energieversorgung der Aufladestation 14 ist in einer Grundstellung, wie es rechts in Figur 2 gezeigt ist, im oberen Bereich des Rohrs 34 der Aufnahmeeinrichtung 32 angeordnet. Die Schnittstelle 50 ist über ein Spiralkabel 52 und das daran angeschlossene Kabel 16, das aus der Aufnahmeeinrichtung 32 heraus in einen im Verfahrweg 18 vorgesehenen Kabelkanal 54 geführt ist, mit der zentralen Energiequelle verbunden.

An jeder Aufladestation 14 ist eine Anforderungseinheit 56 vorgesehen, die mit der zentralen Steuerungseinheit 30 kommuniziert. Jede Anforderungseinheit 56 umfasst einen Anforderungsdruckknopf 58 sowie eine Kartenleseeinheit 60.

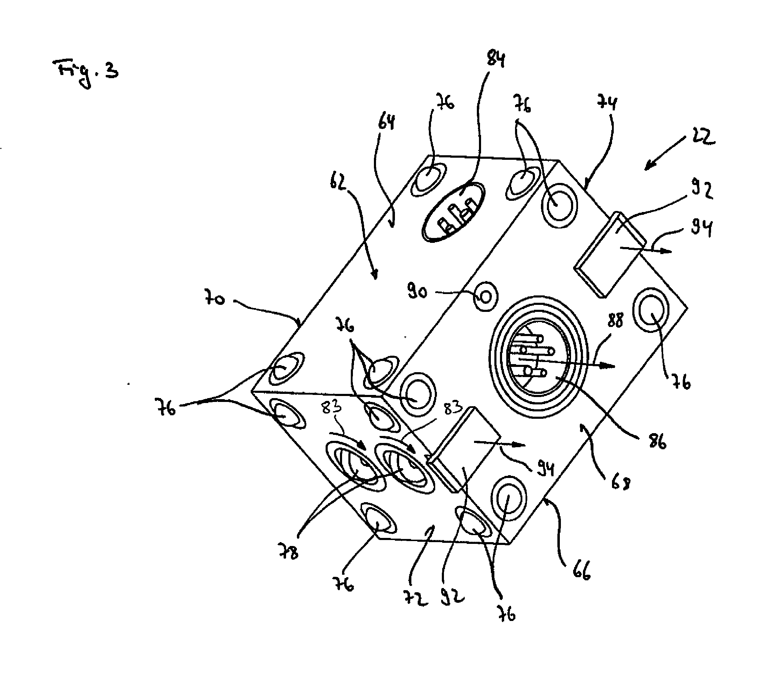

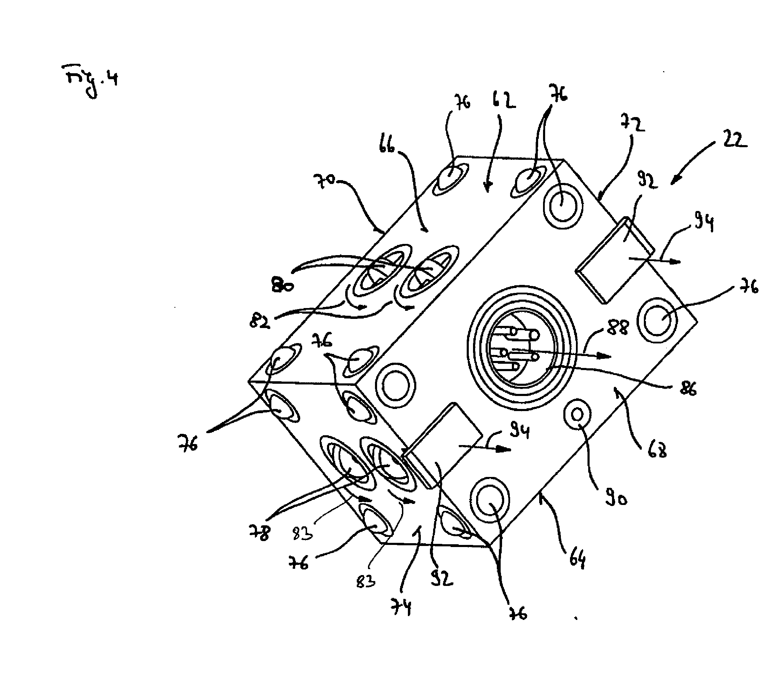

Die Kopplungseinheiten 22 haben jeweils, wie es in den Figuren 3 und 4 gezeigt ist, ein im Wesentlichen quaderförmiges Gehäuse 62 mit einer Oberseite 64, einer Unterseite 66, einer Vorderseite 68, eine Rückseite 70 und zwei einander gegenüberliegende Stirnseiten 72 und 74. An dem Gehäuse 62 sind an allen Seiten 64, 66, 68, 70, 72 und 74 an mehreren Stellen Kugelrollen 76 zur Abstützung und Führung des Gehäuses 62 während einer Bewegung entlang der Verfahrwege 18 und innerhalb der Aufnahmeeinrichtungen 32 vorgesehen. Ferner ist in dem Gehäuse 62 eine nicht im Einzelnen dargestellte Antriebseinheit angeordnet, über die von den Stirnseiten 72 und 74 vorstehende Räder 78 sowie von der Unterseite 66 vorstehende Räder 80 wahlweise angetrieben werden können. Die Räder 78 und 80 können jeweils um 90° verschwenkt werden, wie es durch die entsprechenden Pfeile 82 und 83 angedeutet ist. Somit kann jede Kopplungseinheit 22 in drei senkrecht zueinander stehenden Richtungen angetrieben werden. An der Oberseite 64 ist eine Schnittstelle 84 und an der Vorderseite 68 ist eine Schnittstelle 86 vorgesehen. Die Schnittstelle 84 ist mit den Schnittstellen 50 der Energieversorgungen der einzelnen Aufladestationen 14 koppelbar, und die Schnittstelle 86 ist mit den Aufladeschnittstellen 24 der Elektrofahrzeuge 28 koppelbar. Die Schnittstelle 86 kann zur Durchführung der Kopplung mit einer Aufladeschnittstelle 24 automatisch nach Art eines Teleskops in Richtung des Pfeils 88 aus dem Gehäuse 62 ausgefahren werden, auch wenn dies vorliegend nicht im Einzelnen dargestellt ist. An der Vorderseite 68 ist ferner eine Lokalisierungseinrichtung 90 zur automatischen Lokalisierung der Position einer Aufladeschnittstelle 24 eines an einer Aufladestation 14 geparkten Elektrofahrzeugs 28 vorgesehen. Die Lokalisierungseinrichtung 90 umfasst eine Kamera und ein entsprechendes Bildverarbeitungsprogramm, mit deren Hilfe eine Positionsermittlung einer Aufladeschnittstelle 24 auf der Basis von optischen Merkmalen der Aufladeschnittstelle 24 durchführbar ist. Darüber hinaus sind an der Vorderseite 68 Mitnehmer 92 vorgesehen, die bedarfsgerecht ausfahrbar sind, wie es durch die Pfeile 94 angedeutet ist. Die Kopplungseinheit 22 kommuniziert mit der zentralen Steuerungseinheit 30 und wird zumindest teilweise von dieser gesteuert.

Nachfolgend wird der Betrieb des Aufladestationensystems 10 beschrieben.

Will eine Person, die ihr Elektrofahrzeug 28 auf einem der Parkplätze 12 abgestellt hat, die Elektrofahrzeug-Energiequelle 26 über die dem Parkplatz 12 zugeordnete Aufladestation 14 aufladen, so steckt sie zunächst ihre Karte in die Kartenleseeinheit 60 der Anforderungseinheit 56 ein und betätigt daraufhin den Anforderungsdruckknopf 58. Ein die Aufladestation 14 identifizierendes Anforderungssignal sowie die über die Kartenleseeinheit 60 ausgelesenen Karteninformationen werden an die zentrale Steuerungseinheit 30 weitergeleitet, was drahtgebunden oder drahtlos erfolgen kann, beispielsweise per Funk oder dergleichen. Die Steuerungseinheit 30 identifiziert die Aufladestation 14 anhand des Anforderungssignals und steuert eine in dem Magazin 20 angeordnete Kopplungseinheit 22 derart an, dass diese aus dem Magazin 20 in den Verfahrweg 18 und von dort aus zur identifizierten Aufladestation 14 bewegt wird. Die genaue Position der Aufladestation 14 kann beispielsweise anhand eines vorab festgelegten Koordinatensystems oder dergleichen erfolgen. Die Bewegung der Kopplungseinheit 22 durch den Verfahrweg 18 wird realisiert, indem die von der Unterseite 66 des Gehäuses 62 der Kopplungseinheit 22 vorstehenden Räder 80 drehend angetrieben werden. Auf Höhe der Aufnahmeeinrichtung 32 der identifizierten Aufladestation 14 wird die Kopplungseinheit 22 angehalten. Die Räder 78 werden um 90° in Richtung der Pfeile 83 gedreht, und die Räder 80 werden um 90° in Richtung der Pfeile 82 gedreht. Die Kopplungseinheit 22 fährt daraufhin durch das Langloch 42, die Öffnung 40 und die Aussparung 38 in das Rohr 34 der Aufnahmeeinrichtung 32 ein, öffnet die Verschlussplatten 46 und 48 und ermittelt unter Verwendung der Lokalisierungseinrichtung 90 die Ist-Position der Aufladeschnittstelle 24 des an der Aufladestation 14 geparkten Elektrofahrzeugs 28, die als Soll-Position abgespeichert wird. Stimmt die Ist-Position der des Rohrs 34 der Aufnahmeeinrichtung 32 in der Erstreckungsrichtung des Verfahrwegs 18 nicht mit der ermittelten Ist-Position der Aufladeschnittstelle 24 bzw. mit der Soll-Position überein, so fährt die Kopplungseinheit 22 zurück in den Verfahrweg 18, um das Rohr 34 der Aufnahmeeinrichtung 32 zusammen mit der Hülse 36 entlang des Verfahrwegs 18 entsprechend zu verschieben. Hierzu werden die Räder 78 und 80 der Kopplungseinheit 22 erneut um 90° gedreht und die Mitnehmer 92 ausgefahren. Anschließend wird die Kopplungseinheit 22 in die gewünschte Richtung entlang des Verfahrwegs 18 bewegt. Sobald der Mitnehmer 92 mit der Kante der Aussparung 38 der Hülse 36 in Kontakt kommt, wird die Hülse 36 mit dem an dieser befestigten Aufnahmeeinrichtungsrohr 34 mitgenommen. Die Kopplungseinheit 22 wird angehalten, sobald die Ist-Position mit der Soll-Position in Erstreckungsrichtung des Verfahrwegs 18 übereinstimmt. Anschließend werden die Mitnehmer 92 wieder eingefahren, woraufhin die Kopplungseinheit 22 in der zuvor beschriebenen Weise zurück in die Aufnahmeeinrichtung 32 bewegt wird, wo sie erneut die Verschlussplatten 46 und 48 öffnet. Nunmehr wird die Kopplungseinheit 20 senkrecht zur Erstreckungsrichtung des Verfahrwegs 16 innerhalb der Aufnahmeeinrichtung 32 nach oben verfahren, indem die von den Stirnseiten 72 und 74 des Gehäuses 62 der Kopplungseinheit 22 vorstehenden Räder 78 drehend angetrieben werden. Oben angekommen erfolgt automatisch die Kopplung der Schnittstelle 84 der Kopplungseinheit 22 mit der Schnittstelle 50 der Aufladestation 14. Nunmehr wird die Schnittstelle 86 der Kopplungseinheit 22 zur Aufladeschnittstelle 24 des Elektrofahrzeugs 28 in der Richtung senkrecht zur Erstreckungsrichtung des Verfahrwegs 18 durch entsprechendes Verfahren der Kopplungseinheit 22 ausgerichtet. Sind die Schnittstelle 86 der Kopplungseinheit 22 und die Aufladeschnittstelle 24 des Elektrofahrzeugs 28 ordnungsgemäß zueinander ausgerichtet, so wird die Schnittstelle 86 zur Erzeugung einer elektrischen Verbindung teleskopartig in Richtung des Pfeils 88 ausgefahren und mit der Aufladeschnittstelle 24 gekoppelt. Der Ladevorgang kann nunmehr erfolgen. Die zentrale Steuerungseinheit 30 kann zusätzlich die Kosten für den Ladevorgang ermitteln und diese über die erfassten Karteninformationen in Rechnung stellen.

Das automatisierte Aufladestationensystem 10 ist insbesondere dahingehend von Vorteil, dass eine Vielzahl von Aufladestationen 12 bzw. Parkplätzen 12 mit nur wenigen Kopplungseinheiten 22 kostengünstig versorgt werden kann. Ferner können diejenigen Elektrofahrzeug-Energiequellen 26, die an das Aufladestationensystem 10 angeschlossen sind, als Zwischenspeicher für die zentrale Energiequelle genutzt werden. Ein weiterer Vorteil besteht darin, dass einzelne Kopplungseinheiten 22 mit verschiedenen Schnittstellen 86 ausgerüstet werden können, falls keine einheitliche Normung für eine Verbindung vorliegt.

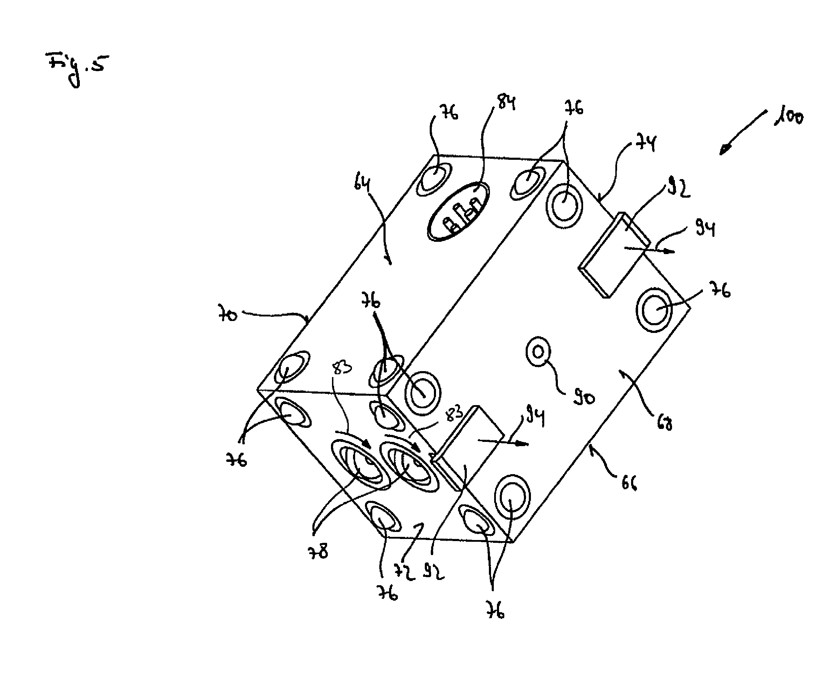

Figur 5 zeigt eine entlang der Verfahrwege bewegbare Lokalisierungseinheit 100, die einen ähnlichen Aufbau wie die in den Figuren 3 und 4 gezeigte Kopplungseinheit 22 aufweist, weshalb gleiche oder gleichartige Bauteile mit den gleichen Bezugsziffern versehen sind und nachfolgend nicht erneut beschrieben werden. Die Lokalisierungseinheit 100 unterscheidet sich im Wesentlichen dahingehend von der Kopplungseinheit 22, dass die Lokalisierungseinheit 100 ausschließlich zum Lokalisieren der Position einer Aufladeschnittstelle 24 eines an einer Aufladestation 14 geparkten Elektrofahrzeugs 28 und nicht zur Durchführung eines Ladevorgangs vorgesehen ist, weshalb die Lokalisierungseinheit 100 keine Schnittstelle 86 aufweist.

Will eine Person, die ihr Elektrofahrzeug 28 auf einem der Parkplätze 12 abgestellt hat, die Elektrofahrzeug-Energiequelle 26 über die dem Parkplatz 12 zugeordnete Aufladestation 14 aufladen, so steckt sie zunächst, wie es zuvor beschrieben wurde, ihre Karte in die Kartenleseeinheit 60 der Anforderungseinheit 56 ein und betätigt daraufhin den Anforderungsdruckknopf 58. Ein die Aufladestation 14 identifizierendes Anforderungssignal sowie die über die Kartenleseeinheit 60 ausgelesenen Karteninformationen werden an die zentrale Steuerungseinheit 30 weitergeleitet, was drahtgebunden oder drahtlos erfolgen kann, beispielsweise per Funk oder dergleichen. Die Steuerungseinheit 30 identifiziert die Aufladestation 14 anhand des Anforderungssignals und steuert eine in dem Magazin 20 angeordnete Lokalisierungseinheit 100 derart an, dass diese aus dem Magazin 20 in den Verfahrweg 18 und von dort aus zur identifizierten Aufladestation 14 bewegt wird. Dort angekommen wird sie in die Aufnahmeeinrichtung 32 der Aufladestation 14 bewegt, von wo aus sie automatisch die Position der Aufladeschnittstelle 24 des an der Aufladestation 14 geparkten Elektrofahrzeugs 28 ermittelt. Die Lokalisierungseinheit 100 verlässt daraufhin die Aufladestation 14 und wird zurück ins Magazin 20 bewegt. Die erfassten Positionsdaten sendet sie beispielsweise über eine drahtlose Schnittstelle an die Steuerungseinheit 30. Die Steuerungseinheit 30 übermittelt die Positionsdaten daraufhin an eine der Kopplungseinheiten 22, die dann zur Durchführung eines Ladevorgangs zur entsprechenden Aufladestation 14 bewegt wird. Das Einfahren der Kopplungseinheit 22 in die Aufnahmeeinrichtung 32 der Aufladestation 14 und das Ankoppeln an die Aufladeschnittstelle 24 des Elektrofahrzeugs 28 erfolgt dann in der zuvor beschriebenen Weise, wobei aufgrund der bereits vorhandenen Positionsdaten eine erneute Positionserfassung der Aufladeschnittstelle 24 des an der Aufladestation 14 geparkten Elektrofahrzeugs 28 nicht erforderlich ist. Entsprechend müssen die Kopplungseinheiten 22, wenn eine Lokalisierungseinheit 100 verwendet wird, auch nicht mit einer eigenen Lokalisierungseinrichtung 90 ausgestattet sein. Durch den Einsatz einer Lokalisierungseinheit 100 können entsprechend Kosten eingespart werden.

### Bezugszeichenliste

- I0: Aufladestationensystem
- I2: Parkplatz
- I4: Aufladestation
- I6: Kabel
- I8: Verfahrweg
- 20: Magazin
- 22: Kopplungseinheit
- 24: Aufladeschnittstelle
- 26: Elektrofahrzeug-Energiequelle
- 28: Elektrofahrzeug
- 30: Steuerungseinheit
- 32: Aufnahmeeinrichtung
- 34: Rohr
- 36: Hülse
- 38: Aussparung
- 40: Öffnung
- 42: Langloch
- 44: Längliche Aussparung
- 46: Verschlussplatte
- 48: Verschlussplatte
- 50: Schnittstelle
- 52: Spiralkabel
- 54: Kabelkanal
- 56: Anforderungseinheit
- 58: Anforderungsdruckknopf

- 60: Kartenleseeinheit
- 62: Gehäuse
- 64: Oberseite
- 66: Unterseite
- 68: Vorderseite
- 70: Rückseite
- 72: Stirnseite
- 74: Stirnseite
- 76: Kugelrolle
- 78: Rad
- 80: Rad
- 82: Pfeil
- 83: Pfeil
- 84: Schnittstelle
- 86: Schnittstelle
- 88: Pfeil
- 90: Lokalisierungseinrichtung
- 92: Mitnehmer
- 94: Pfeil
- I00: Lokalisierungseinheit

## Patentansprüche

1. Automatisiertes Aufladestationensystem (10) zum Verbinden von Elektrofahrzeug-Energiequellen (26) mit einer zentralen Energiequelle, mit
- einer Mehrzahl von Aufladestationen (14), die jeweils eine über eine zentrale Energiequelle gespeiste Energieversorgung aufweisen,
- einem oder mehreren definierten Verfahrwegen (18), die sich entlang der einzelnen Aufladestationen (14) erstrecken,
- einer oder mehreren von entlang der Verfahrwege (18) zu den Aufladestationen (14) bewegbaren Kopplungseinheiten (22), die jeweils zur Erzeugung einer elektrischen Verbindung zwischen einer Aufladeschnittstelle (24) der Elektrofahrzeug-Energiequelle (26) eines an einer Aufladestation (14) positionierten Elektrofahrzeugs (28) und der Energieversorgung der Aufladestation (14) ausgebildet sind, und
- wenigstens einer Steuerungseinheit (30) zur bedarfsgerechten Steuerung der Kopplungseinheiten (22).

2. Aufladestationensystem (10) nach Anspruch 1, **dadurch gekennzeichnet, dass** wenigstens eine mit der Steuereinheit (30) kommunizierende Anforderungseinheit (56) vorgesehen ist.

3. Aufladestationensystem (10) nach einem der vorhergehenden Ansprüche, **dadurch gekennzeichnet, dass** wenigstens ein Antrieb zum Bewegen der Kopplungseinheiten (22) entlang der Verfahrwege (18) vorgesehen ist.

4. Aufladestationensystem (10) nach Anspruch 3, **dadurch gekennzeichnet, dass** jede Kopplungseinheit (22) mit einem eigenen Antrieb versehen ist.

5. Aufladestationensystem (10) nach einem der vorhergehenden Ansprüche, **dadurch gekennzeichnet, dass** jede Aufladestation (14) eine von einem Verfahrweg (18) abzweigende Aufnahmeeinrichtung (32) aufweist, die zur temporären Aufnahme einer Kopplungseinheit (22) und zur Herstellung einer elektrischen Verbindung zwischen der Kopplungseinheit (22) und der Energieversorgung der Aufladestation (14) ausgebildet ist.

6. Aufladestationensystem (10) nach Anspruch 5, **dadurch gekennzeichnet, dass** die Aufnahmeeinrichtung (32) entlang des Verfahrwegs (18) begrenzt verschiebbar ausgeführt ist.

7. Aufladestationensystem (10) nach Anspruch 6, **dadurch gekennzeichnet, dass** jede Kopplungseinheit (22) innerhalb einer Aufnahmeeinrichtung (32) zumindest quer zum Verfahrweg (18) bewegbar aufgenommen ist.

8. Aufladestationensystem (10) nach einem der vorhergehenden Ansprüche, **dadurch gekennzeichnet, dass** wenigstens eine Lokalisierungseinrichtung (90) zur automatischen Lokalisierung der Position der am Elektrofahrzeug (28) vorgesehenen Aufladeschnittstelle (24) vorgesehen ist.

9. Aufladestationensystem (10) nach Anspruch 8, **dadurch gekennzeichnet, dass** jede Kopplungseinheit (22) mit einer Lokalisierungseinrichtung versehen (90) ist.

10. Aufladestationensystem (10) nach Anspruch 8, **dadurch gekennzeichnet, dass** eine entlang der Verfahrwege (18) bewegbare und mit einer Lokalisierungseinrichtung (90) versehene Lokalisierungseinheit (100) vorgesehen ist, welche die von der Lokalisierungseinrichtung (90) ermittelten Positionsdaten an eine Kopplungseinheit (22) oder an die Steuerungseinheit (30) übermittelt.

11. Aufladestationensystem (10) nach einem der vorhergehenden Ansprüche, **dadurch gekennzeichnet, dass** jede Kopplungseinheit (22) mit einer ausfahrbaren Schnittstelle (86) zum Herstellen der elektrischen Verbindung mit der Aufladeschnittstelle (24) eines Elektrofahrzeugs (28) versehen ist.

12. Aufladestationensystem (10) nach einem der vorhergehenden Ansprüche, **dadurch gekennzeichnet, dass** die Verfahrwege (18) ein Schienen- oder Rohrsystem umfassen.

13. Aufladestationensystem (10) nach einem der vorhergehenden Ansprüche, **dadurch gekennzeichnet, dass** mit dem Verfahrweg (18) ein Magazin (20) zur Aufbewahrung mehrerer Kopplungseinheiten (22) verbunden ist.

14. Aufladestationensystem (10) nach einem der vorhergehenden Ansprüche, **dadurch gekennzeichnet, dass** die Anzahl der Kopplungseinheiten (22) geringer als die Anzahl der Aufladestationen (14) ist.
